**Europäisches Patentamt**

**European Patent Office**

**Office européen des brevets**

(19)

(11) Veröffentlichungsnummer: **0 075 219**
**B1**

(12) # EUROPÄISCHE PATENTSCHRIFT

(45) Veröffentlichungstag der Patentschrift:
27.12.85

(51) Int. Cl.⁴: **F 16 K 31/08**

(21) Anmeldenummer: **82108351.6**

(22) Anmeldetag: **10.09.82**

(54) **Magnetventil.**

(30) Priorität: **16.09.81 DE 3136734**

(43) Veröffentlichungstag der Anmeldung:
**30.03.83 Patentblatt 83/13**

(45) Bekanntmachung des Hinweises auf die Patenterteilung:
**27.12.85 Patentblatt 85/52**

(84) Benannte Vertragsstaaten:
**DE FR GB**

(56) Entgegenhaltungen:
**DE - A - 1 414 815**
**DE - A - 1 589 086**
**DE - A - 2 117 413**
**DE - A - 2 208 218**
**GB - A - 1 417 669**
**GB - A - 1 490 033**
**US - A - 3 178 151**
**US - A - 3 814 376**
**US - A - 4 004 258**

(73) Patentinhaber: **ROBERT BOSCH GMBH, Postfach 50, D-7000 Stuttgart 1 (DE)**

(72) Erfinder: **Gast, Theodor, Prof.Dr.-Ing., Bergstrasse 1, D-1000 Berlin 39 (DE)**
Erfinder: **Kubach, Hans, Dipl.-Ing., Danzigerstrasse 9, D-7015 Korntal (DE)**
Erfinder: **Binder, Kurt, Dipl.-Ing., Am Sonnenweg 30, D-7000 Stuttgart 75 (DE)**

**Beschreibung**

Die Erfindung geht aus von einem Magnetventil nach der Gattung des Hauptanspruchs.

Aus der GB-A-1 490 033 ist ein Magnetventil bekannt, dessen Ventilkörper als Kugel aus magnetisch leitendem Material ausgebildet ist. Oberhalb der Kugel ist ein Stabmagnet angeordnet, der in Längsrichtung magnetisiert ist. Der Stabmagnet ist von einem Körper aus nicht magnetischem Material umgeben. Oberhalb des nicht magnetischen Körpers befindet sich ein von einer Spule umgebener magnetischer Kern, der koaxial zum Stabmagneten angeordnet ist. Wenn die Spule keine elektrischen Signale empfängt, wird die Kugel von dem an seinen Enden unterschiedliche Pole aufweisenden Stabmagneten angezogen, so daß sie in Kontakt mit dem Stabmagneten bleibt. Gleichzeitig wird der Kern magnetisiert, so daß der Kern und der Stabmagnet sich gegenseitig anziehen und der Stabmagnet an den nicht magnetischen Körper, der teilweise zwischen Kern und Stabmagnet liegt, anstößt und das Ventil im geöffneten Zustand ist. Wenn die Spule von Strom durchflossen wird, wird in dem Kern ein magnetisches Feld aufgebaut, so daß die magnetischen Pole des Kerns umgekehrt werden und der Stabmagnet mit der Kugel von dem Kern abgestoßen werden. Die Kugel wird auf den Ventilsitz gepreßt, so daß das Ventil geschlossen wird. Diese Anordnung hat den Nachteil, daß die Vorteile der Permanentfelderregung nicht genutzt werden, da die Energie des Magnetfeldes, die am Energieumsatz beteiligt ist, nur einen ganz geringen Teil der Feldenergie umfaßt, unter anderem deswegen, weil der magnetische Nutzfluß im wesentlichen in einem Magnetkreis auftritt, der in weiten Abschnitten einen hohen magnetischen Widerstand besitzt.

Aus den Schriften DE-A-2 208 218 und DE-A-1 589 086 sind Magnetventile der eingangs genannten Art bekannt. Dort ist der Permanentmagnet jedoch so polarisiert, daß sein Magnetfeld radial zur Symmetrieachse der Weicheisenkerne verläuft, die zusammen mit den Spulen die Stellmagnete bilden. Koaxial zu dieser Symmetrieachse ist der Anker in merklichem Abstand zu den Spulen angeordnet und wird durch das Magnetfeld des Permanentmagneten in einer labilen Mittelstellung gehalten, solange keine der in der axialen Verlängerung des Ankers beidseitig angeordneten Steuerspulen durch einen elektrischen Strom erregt ist. Das Magnetfeld dieser Spulen ist koaxial zur Symmetrieachse und dementsprechend quer zum Magnetfeld des Permanentmagneten ausgerichtet. Bei Erregung einer der beiden Steuerspulen wird der Anker aus seiner Mittelstellung in eine von zwei Endlagen gebracht und zugleich ein Ventil geschaltet. Nach dem Schalten wird die jeweilige Spule wieder stromlos und es wird die Haltekraft des Ventils allein durch die Feldstärke des Permanentmagneten aufgebracht. Dabei ist nur ein einziger Arbeitsluftspalt bzw. im Gesamtschaltbereich nur zwei Arbeitsluftspalte des Permanentmagneten wirksam. Dies hat den Nachteil, daß für den Schaltvorgang durch die Spulen eine höhere Magnetkraft aufgebracht werden muß als die das Ventil z. B. schließende Kraft des Permanentmagneten. Bei diesen bekannten Vorschlägen sind die Spulen in einem beträchtlichen Abstand vom Anker entfernt angeordnet. Auch hier tritt der magnetische Nutzfluß zu großen Teilen in einem Magnetkreis auf, der in weiten Abschnitten einen hohen magnetischen Widerstand besitzt. Wegen der Durchflußquerschnitte am Ventil sind hohe Schalthübe des Ankers notwendig, so daß vor dem Umschalten große Luftspalte mit erheblichen magnetischen Widerständen zu überwinden sind.

Die Ausgestaltung hat ferner den Nachteil, daß die Spulen, durch die das Magnetventil geschaltet wird, getrennt angesteuert werden müssen. Die Kontaktierung wird somit sehr aufwendig.

Aufgabe der Erfindung ist es, ein schnell und mit geringem Strombedarf arbeitendes Magnetventil zu entwickeln, bei dem diese Nachteile reduziert werden.

Das erfindungsgemäße Magnetventil mit den kennzeichnenden Merkmalen des Hauptanspruchs hat den Vorteil, daß sich der dabei verwendete axial gepolte Permanentmagnet wesentlich wirtschaftlicher aus kostengünstigem hochleistungsfähigen anisotropen Magnetmaterial herstellen läßt als ein entsprechend radial gepolter Magnet. Der solchermaßen axial gepolte Magnet erlaubt eine intensivere Kraftwirkung im Stellsinne des Ankers bei geringstem magnetischem Widerstand und kleinen Arbeitsluftspalten. Durch die Anordnung und Wicklungsart der zugeordneten Spulen, die so in einem einzigen Wicklungsvorgang hergestellt werden können, bieten sich wirtschaftliche Vorteile. Weiterhin ist der Energiebedarf für die Betätigung des Ankers und des Ventilkörpers sehr gering, da der wesentliche Teil des magnetischen Nutzflusses des Permanentmagneten verlustarm verwendet werden kann, den Ventilkörper in die gewünschte Position zu bringen und weil der Strombedarf für die Ansteuerung durch die Spulen aufgrund der bereits vorgerichteten Magnetisierung des Ankers in Betätigungsrichtung gering ist. Der vom Permanentmagneten erzeugte Magnetfluß geht in diesem Fall voll als Multiplikationsfaktor für den resultierenden magnetischen Gesamtfluß ein. Dies vergrößert zusätzlich die Schaltgeschwindigkeit, da der Zeitbedarf zur Änderung des notwendigen Magnetflusses geringer ist. Der Aufbau des durch die Spulen erzeugten Magnetfelds ist damit unmittelbar in mechanische Verstellenergie umsetzbar.

Durch die in den Unteransprüchen aufgeführten Maßnahmen sind vorteilhafte Weiterbildungen und Verbesserungen möglich. Durch die Verwendung von vier Luftspalten, gemäß Anspruch 4 und den an allen dieser Arbeitsluftspalte wirkenden vom elektrischen Strom erzeugten Magnetfluß, verringert sich die pro Spalt aufzubringende Kraft bei gleicher Summenkraft bei niedrigem Strombedarf.

Durch die Ausgestaltung nach Anspruch 5 und 6 kann die Kraft-Weg-Charakteristik (F = f(s)) so beeinflußt werden, daß zum Schließen des Magnetventils eine besonders große Kraft bei kleinem Strombedarf zur Verfügung steht. Entsprechend dem geringen Stromfluß ist auch die Ansprechgeschwindigkeit groß.

Da die beiden Spulen auf einem gemeinsamen starren Spulenkörper gewickelt sind, wird trotz der großen Anzahl von Luftspalten der Zusammenbau des Magnetsystems nicht erschwert. Wegen der Sättigung des Magnetflusses im Anker wird der Permanentfluß gegenüber Änderungen der Polarisation des Permanentmagneten, z.B. als Funktion der Temperatur, stabilisiert. Die angegebene Anordnung der Arbeitsluftspalte ermöglicht den Einbau des Ankers, nachdem der unbewegliche Teil des Magnetsystems funktionsfähig hergestellt ist. Durch besondere Ausführungen der Arbeitsluftspalte kann die Kennlinie der Kraft in Abhängigkeit vom Hub über den Ventilsitz beeinflußt werden.

Ein Ausführungsbeispiel des erfindungsgemäßen Magnetventils ist in der Zeichnung dargestellt und wird in der nachfolgenden Beschreibung näher erläutert. Es zeigt

Fig. 1 einen Schnitt durch das Magnetventil,

Fig. 2 schematisch den Verlauf der magnetischen Flüsse und

Fig. 3 eine weitere mögliche Anordnung der Luftspalte.

Das erfindungsgemäß schnell schaltende Magnetventil wird z. B. bei Kraftfahrzeugeinspritzpumpen verwandt.

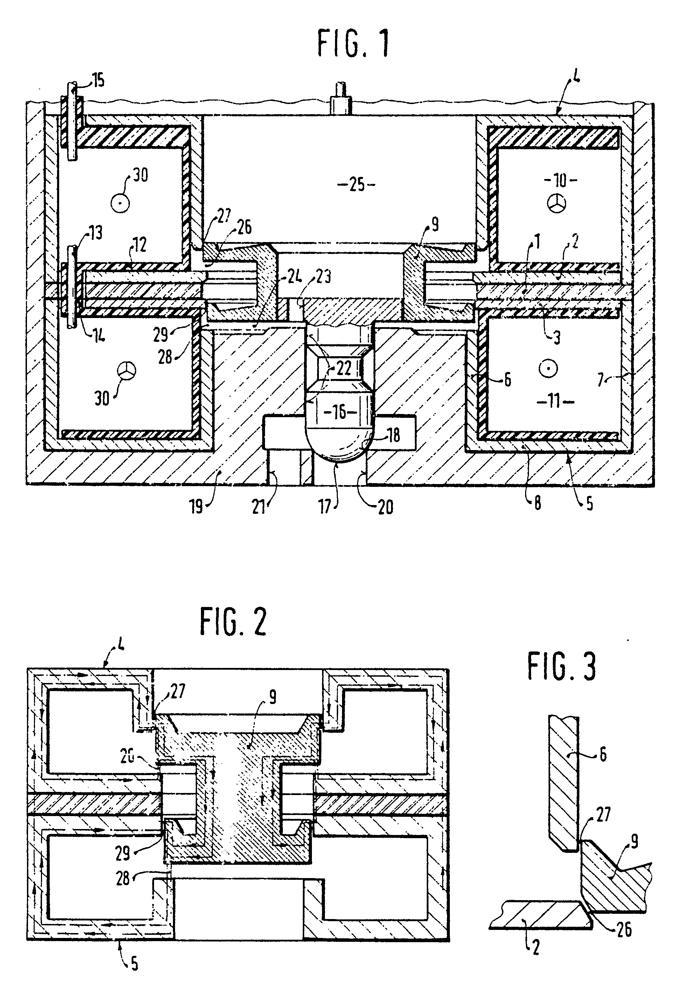

In Fig. 1 ist der Permanentmagnet 1 als kreisringförmige Scheibe mit axialer Magnetisierung ausgebildet. Oberhalb des Permanentmagneten 1 liegt auch kreisringförmig eine erste Magnetleiterscheibe 2 und unterhalb des Permanentmagneten 1 eine zweite Magnetleiterscheibe 3. Wegen der axialen Magnetisierung weisen die erste und zweite Magnetleiterscheibe 2, 3 unterschiedliche Magnetpole auf, z. B. ist die erste Magnetleiterscheibe 2 als Nordpol und die zweite Magnetleiterscheibe 3 als Südpol ausgebildet. Der Permanentmagnet 1 und die erste und zweite Magnetleiterscheibe stehen mit einem ersten Weicheisenkern 4 und einem zweiten Weicheisenkern 5 in Verbindung. Die Weicheisenkerne 4, 5 sind jeweils als zwei konzentrisch zueinander liegende Hohlzylinder 7, 6 ausgebildet, die an einer Stirnfläche über eine magnetisch leitende Deckplatte 8 miteinander verbunden sind. Die Höhe des äußeren Zylinders 7 ist größer als die des inneren Zylinders 6. Der erste und zweite Weicheisenkern 4, 5 liegen sich mit ihrem offenen Stirnflächen gegenüber, wobei der Permanentmagnet 1 und die Magnetleiterscheiben 2 und 3 zwischen ihnen angeordnet sind und die äußeren Hohlzylinder 7 auf den Permanentmagneten 1 stoßen. Die erste und zweite Magnetleiterscheibe 2, 3 sind jeweils in der Weise mit dem ersten und zweiten Weicheisenkern 4,5 magnetisch miteinander verbunden, daß sie mit ihrem Rand an die jeweiligen äußeren Zylinder 7 anstoßen. Durch diese Anordnung bilden sich die Weicheisenkerne zu unterschiedlichen magnetischen Polen aus, z. B. ist der erste Weicheisenkern 4 ein Nordpol und der zweite Weicheisenkern 5 ein Südpol. Innerhalb der inneren Hohlzylinder 6 der Weicheisenkerne 4, 5 liegt ein Anker 9 aus magnetisch leitendem Material, der als Hohlzylinder mit an den Stirnseiten radial abstehenden Flanschen ausgebildet ist. Die Flansche des Ankers 9 bilden mit den Weicheisenkernen 4, 5 und den Magnetleiterscheiben 2, 3 jeweils einen Luftspalt, wobei ein erster Luftspalt 26 zwischen Anker 9 und erster Magnetleiterscheibe 2 und ein dritter Luftspalt 28 zwischen Anker 9 und zweitem Weicheisenkern 5 senkrecht zur Kraftrichtung des Ventils und ein zweiter Luftspalt 27 zwischen Anker 9 und erstem Weicheisenkern 4 und ein vierter Luftspalt 29 zwischen Anker 9 und zweiter Magnetleiterscheibe 3 in Richtung der Kraft des Ventils liegen. Der Raum zwischen dem äußeren Hohlzylinder 7 und dem inneren Hohlzylinder 6 des jeweiligen Weicheisenkerns 4, 5 ist mit einer ersten und einer zweiten Leiterspule 10, 11 gefüllt, wobei deren Wicklungssinn entgegengesetzt ist. Die Spulen 10, 11 sind auf einem gemeinsamen elektrisch isolierenden Spulenkörper 12 gewickelt. Über Leiterdrähte 13 sind die Spulen 10, 11 miteinander verbunden. Die Leiterdrähte 13 laufen über je eine Brücke 14 des Spulenkörpers 12. Der Permanentmagnet 1 und die Magnetleiterscheiben 2, 3 sind an den Stellen der Brücken 14 entsprechend ausgespart. Zweckmäßigerweise sind die Aussparungen so ausgebildet, daß während der Montage der Permanentmagnet 1 mit den beiden Magnetleiterscheiben 2, 3 von vorn (in der Zeichenebene von Fig. 1) in den gewickelten Spulenkörper 12 geschoben werden kann. Dann werden die Weicheisenkerne 5, 4 aufgeschoben. Eine der beiden elektrischen Zuführungen der ersten Spule 10 ist mit 15 bezeichnet.

Der Anker 9 trägt einen Ventilstößel 16 aus antimagnetischem Material. An dem Ventilstößel 16 befindet sich eine Kugelkalotte 17, die den Ventilsitz 18 in dem Gehäuse 19 aus antimagnetischem Material hydraulisch zu öffnen oder zu schließen gestattet. Die hydraulischen Zu- bzw. Abflüsse sind mit 20, 21 bezeichnet. Der Ventilstößel 16 ist in den Lagerstellen 22 axial im Gehäuse 19 geführt, so daß Lagerstellen 22 und Ventilsitz 18 exakt fluchten. Der Ventilstößel 16 weist im oberen Bereich eine Bohrung 23 auf, die den Hohlraum 24 mit dem Außenraum 25 verbindet. Durch die Bohrung 23 kann die Flüssigkeit, z. B. Kraftstoff, die sich im Hohlraum 24 befindet, bei Hub des Ankers 9 nach unten leicht gängig entweichen.

Anhand der Fig. 2, die den Verlauf der Magnetflüsse im Magnetventil anzeigt, soll die Wirkungsweise des Magnetventils beschrieben werden. Werden die Spulen 10, 11 vom elektrischen Strom durchflossen, so baut sich neben dem in Fig. 2 strichpunktiert gezeichneten Permanentmagnetfeld ein weiteres in der Fig. 2 gestrichelt gezeichnetes Magnetfeld auf. Wegen der geringen magnetischen Leitfähigkeit des Permanentmagneten 1 und der höheren Leitfähigkeit der Magnetleiterscheiben 2, 3 schließt sich das durch den elektrischen Strom hervorgerufene Magnetfeld jeweils über den ersten und zweiten Weicheisenkern 4, 5, die erste und zweite Magnetleiterscheibe 2, 3, über den ersten Luftspalt 26 und entsprechend über den vierten Luftspalt 29, über den jeweiligen Teil des Ankers 9 und über den zweiten Luftspalt 27 und entsprechend über den dritten Luftspalt 28. Werden die Leiterspulen 10, 11 in der in Fig. 1 mit 30 bezeichneten Richtung vom elektrischen Strom durchflossen, so addiert sich in dem ersten und dritten Luftspalt 26, 28 deren Magnetfeld zu dem Feld des Permanentmagneten 1, während in dem zweiten und vierten Luftspalt 27, 29 die Richtung der Magnetfelder entgegengesetzt ist, so daß im Grenzfall der Gesamtfluß in dem zweiten und vierten Luftspalt 27, 29 zu Null wird. Eine Addition der Felder verstärkt die mechanische Anziehung, eine Subtraktion entspricht einer Abschwächung, so daß auf den Anker 9 durch den Einfluß des elektrischen Stromes eine zusätzliche Kraft nach unten (in der Zeichenebene gesehen) ausgeübt wird. Bei Umpolung des elektrischen Stromes ändert sich die Richtung des durch diesen hervorgerufenen Magnetfeldes, so daß sich die Richtung der dem elektrischen Strom zugeordneten Kraft auch umpolt, d. h., im ersten und dritten Luftspalt 26, 28 findet eine Subtraktion der Magnetfelder und im zweiten und vierten Luftspalt 27, 29 eine Addition der Magnetfelder statt.

Für den Fall geringer magnetischer Sättigung des Ankers 9 im Bereich der Magnetflüsse — dieser Fall wird für den Verlauf der Magnetflüsse nach Fig. 2 angenommen — sollte das vom Permanentmagneten 1 hervorgerufene Magnetfeld temperatur- und zeitunabhängig sein. Dies wird durch hochwertige Permanentmagneten erreicht. Wird der Anker 9 im Bereich der Magnetfelder in der Sättigung betrieben, so ist die Konstanz des Magnetfeldes des Permanentmagneten 1 von geringerer Bedeutung, so daß preisgünstige Permanentmagneten verwendet werden können.

Bei Überlagerung des Permanentmagnetfeldes $\Phi_P$ und des Magnetfeldes $\Phi_S$, hervorgerufen durch den Strom durch die Spulen 10, 11, gilt für die Gesamtkraft:

$$F \sim (\Phi_P + \Phi_S)^2 = \Phi_P + 2\,\Phi_P\Phi_S + \Phi_S^2$$

wobei die Änderung der Kraft durch das Magnetfeld der Spule gebildet wird zu:

$$\Delta F = 2\,\Phi_P\Phi_S + \Phi_S^2$$

d. h., die Kraftänderung durch den Fluß $\Phi_S$ der Spule des Elektromagneten wird mit dem Fluß $\Phi_P$ des Permanentmagneten 1 verstärkt. Daher kann bei einem konstanten Kraftbedarf mit einem großen Magnetfluß $\Phi_P$ des Permanentmagneten 1 die Energie des mit dem Elektromagneten verknüpften Magnetfeldes $\Phi_S$ gegenüber einem System ohne Permanentfeld vermindert werden. Dies ergibt bei gleichen Luftspalten beider Systeme eine Verminderung der Induktivität des Permanentfeld-Magnetsystems, so daß im Idealfall erst dann elektrische Energie vom System aufgenommen wird, wenn sie gleichzeitig als mechanische Arbeit bei der Bewegung abgegeben wird.

Im vorliegenden Fall ist das Magnetventil mit vier Luftspalten 26, 27, 28, 29 angelegt. Die größere Anzahl von Luftspalten verringert die an jedem Spalt aufzubringende Kraft bei gleicher Summenkraft, d. h., bei gleichem Spaltdurchmesser wird ein geringerer Fluß pro Spalt gefordert, wobei sich damit auch die Spaltbreite verringert. Die Spaltbreite entspricht etwa der Dikke der Magnetleiter, die damit auch verringert werden kann. Die Zeitkonstante der Eindringgeschwindigkeit des Magnetflusses in die Magnetleiter ist wegen der Wirbelströme proportional zu dem Quadrat der Spaltbreite bei gleichem elektrischen Widerstand der Magnetleiter. Eine kleinere Spaltbreite ergibt daher auch eine kleinere Zeitkonstante der Eindringgeschwindigkeit.

Der erste und dritte Luftspalt 26, 28 sind zur Kraftrichtung senkrecht angeordnet. Entsprechend Fig. 2 entsteht an diesen Spalten bei einem positiven Strom die Kraft in positiver Richtung (in der Zeichenebene nach unten). Da bei geschlossenem Ventil (Ventilhub gleich Null) der erste und dritte Luftspalt 26, 28 minimal sind, sind hier besonders kleine elektromagnetische Spannungen (erzeugt durch die elektrische Stromstärke) für eine bestimmte Kraft erforderlich, die dann durch geringe magnetische Streuung maximiert werden kann. Die kleinen magnetischen Spannungen reduzieren den Haltestrom für das Ventil. Bei diesem positiven Strom werden der zweite und vierte Luftspalt 27, 29 vom Permanentfluß entgegengesetzt zum Elektromagnetfluß durchsetzt, so daß eine Sättigung der Magnetleiter verhindert wird. Wegen der konstruktiv gewählten kleinen Radialspalte entsteht somit ein kleiner magnetischer Spannungsabfall an den Luftspalten 27, 29. Da im geschlossenen Zustand des Ventils also alle Luftspalten einen kleinen magnetischen Spannungsabfall besitzen, ergänzen sich die Arten des ersten und dritten Luftspalts 26, 28 und des zweiten und vierten Luftspalts 27, 29 in der Weise, daß im geschlossenen Zustand des Ventils eine große Haltekraft bei kleinem positivem Strom besteht. Bei Umpolung des elektrischen Stromes wird die Kraft negativ, da sich der Elektromagnetfluß und der Permanentmagnetfluß in dem zweiten und vierten Luftspalt 27, 29 addieren und in dem ersten und dritten Luftspalt 26, 28 subtrahieren. Die Kraft wird also hauptsächlich von dem zweiten und vierten Luftspalt 27, 29 aufgebracht, wobei die Magnetleiter im Bereich des zweiten und vierten Luftspalts, insbesondere im geschlossenen Zustand des Ventils, sehr stark magnetisch gesättigt werden, so daß am zweiten und vierten Luftspalt 27, 29 besonders bei geschlossenem Zustand des Ventils ein hoher Energieumsatz mit großer Kraft auftritt. Der magnetische Spannungsabfall des Elektromagnetkreises ist, wie oben ausgeführt, an dem jetzt wenig wirksamen ersten und dritten Luftspalt 26, 28 bei geschlossenem Zustand des Ventils besonders niedrig. Damit ist zum schnellen Abfall des Ventils bei negativem Strom nur wenig Feldenergie aufzubauen, wobei insbesondere vorteilhaft ist, daß hochpermeable Magnetleiter bis zur Sättigung angesteuert werden, wodurch mit relativ kleinen Feldenergien ein sehr großes mechanisches Arbeitsvermögen erreicht wird.

Fig. 3 zeigt als Ausschnitt aus Fig. 1 eine besondere Anordnung des ersten und zweiten Luftspalts 26, 27. Der erste Luftspalt 26 liegt wie in Fig. 1 zwischen erster Magnetleiterscheibe 2 und dem Anker 9, wobei die erste Magnetleiterscheibe 2 und der Anker 9 im Bereich dieses ersten Luftspalts 26 konisch ausgebildet sind. Durch diese Anordnung kann die Kennlinie der Kraft in Abhängigkeit des Hubs beeinflußt werden. Weiterhin kann die Kennlinie der Kraft in Abhängigkeit vom Hub durch eine besondere Ausbildung des zweiten Luftspalts 27 beeinflußt werden, und zwar dadurch, daß er in dem Bereich, in dem der Anker 9 und der innere Hohlzylinder 6 des ersten Weicheisenkerns 4 in geöffneter Stellung des Ventils sich überdecken, größer ist als in dem Bereich, in dem sich Anker 9 und erster Weicheisenkern 4 bereits in geschlossener Stellung des Ventils überlappen. Diese Möglichkeit ist in Fig. 3 gestrichelt dargestellt.

Fig. 3 zeigt zwar nur den Ausschnitt des ersten und zweiten Luftspalts 26, 27, aber das hier Gesagte gilt entsprechend für den dritten und vierten Luftspalt 28, 29.

**Patentansprüche**

1. Magnetventil mit zwei Weicheisenkernen (4, 5), die von je einer Spule (10, 11) umgeben sind und zueinander koaxial angeordnet sind und zwischen denen ein ringförmiger Permanentmagnet (1) angeordnet ist und mit einem Anker (9) aus magnetisch leitendem Material, der einen Ventilkörper (16) trägt und ständig vom Permanentmagneten umgeben ist, dadurch gekennzeichnet, daß die Weicheisenkerne (4, 5) je einen Innenzylinder (6) aufweisen, innerhalb denen der Anker (9) axial verstellbar ist, daß die Spulen (10, 11) der Weicheisenkerne zueinander gegensinnig gewickelt sind und in Reihe geschaltet sind und daß das Magnetfeld des Permanentmagneten (1) koaxial zu den Magnetfeldern der Spulen (10, 11) ausgerichtet ist.

2. Magnetventil nach Anspruch 1, dadurch gekennzeichnet, daß zwischen den Permanentmagneten (1) und dem ersten Weicheisenkern (4) eine erste kreisringförmige Magnetleiterscheibe (2) und zwischen dem Permanentmagneten (1) und dem zweiten Weicheisenkern (5) eine zweite kreisringförmige Magnetleiterscheibe (3) angeordnet ist.

3. Magnetventil nach Anspruch 2, dadurch gekennzeichnet, daß die Magnetleiterscheiben (2, 3) eine große magnetische Leitfähigkeit aufweisen.

4. Magnetventil nach einem der Ansprüche 1 bis 3, dadurch gekennzeichnet, daß zwischen Anker (9) und erster Magnetleiterscheibe (2) ein erster Luftspalt (26), zwischen Anker (9) und erstem Weicheisenkern ein zweiter Luftspalt (27), zwischen Anker (9) und zweitem Weicheisenkern (5) ein dritter Luftspalt (28) und zwischen Anker (9) und zweiter Magnetleiterscheibe (3) ein vierter Luftspalt (29) angeordnet ist.

5. Magnetventil nach Anspruch 4, dadurch gekennzeichnet, daß der erste und dritte Luftspalt (26, 28) senkrecht zur Richtung der Ankerbewegung angeordnet sind. ·

6. Magnetventil nach Anspruch 4 oder 5, dadurch gekennzeichnet, daß der zweite und vierte Luftspalt (27, 29) in Richtung der Ankerbewegung angeordnet sind.

7. Magnetventil nach Anspruch 4 oder 6, dadurch gekennzeichnet, daß der Anker (9), die erste Magnetleiterscheibe (2) und der zweite Weicheisenkern (5) in den Bereichen, in denen sie den ersten und dritten Luftspalt (26, 28) bilden, konisch ausgebildet sind.

8. Magnetventil nach einem der Ansprüche 4 bis 7, dadurch gekennzeichnet, daß der zweite und vierte Luftspalt (27, 29) in den Bereichen, die vom Anker (9) nur im geöffneten Zustand des Ventils überdeckt werden, größer sind als in den Bereichen, die vom Anker (9) bereits im geschlossenen Zustand des Ventils überdeckt werden.

9. Magnetventil nach einem der Ansprüche 1 bis 8, dadurch gekennzeichnet, daß die gegensinnig gewickelten Spulen (10, 11) auf einem Spulenkörper (12) angeordnet sind.

10. Magnetventil nach einem der Ansprüche 1 bis 9, dadurch gekennzeichnet, daß der Anker (9) nach Zusammenbau der Magnetkreise in Achsrichtung in das Magnetventil montiert wird.

11. Magnetventil nach einem der Ansprüche 1 bis 9, dadurch gekennzeichnet, daß der Anker (9) in der magnetischen Sättigung betrieben wird.

**Claims**

1. Solenoid valve with two soft iron cores (4, 5) which are each surrounded by a coil (10, 11) and arranged mutually coaxially and between which an annular permanent magnet (1) is arranged and with an armature (9) made of magnetically conductive material which carries a valve element (16) and is always surrounded by the permanent magnet, characterised in that the soft iron cores (4, 5) each exhibit an inner cylinder (6), within which the armature (9) is axially adjustable, that the coils (10, 11) of the soft iron cores are wound mutually oppositely and connected in series, and that the magnetic field of the permanent magnet (1) is aligned coaxially to the magnetic fields of the coils (10, 11).

2. Solenoid valve according to Claim 1, characterised in that a first annular magnetic conductor disc (2) is arranged between the permanent magnet (1) and the first soft iron core (4), and a second annular magnetic conductor disc (3) between the permanent magnet (1) and the second soft iron core (5).

3. Solenoid valve according to Claim 2, characterised in that the magnetic conductor disc (2, 3) exhibit a high magnetic conductivity.

4. Solenoid valve according to any of Claims 1 to 3, characterised in that a first air gap (26) is arranged between the armature (9) and the first magnetic conductor disc (2), a second air gap (27) between the armature (9) and the first soft iron core, a third air gap (28) between the armature (9) and the second soft iron core (5), and a fourth air gap (29) between the armature (9) and the second magnetic conductor disc (3).

5. Solenoid valve according to Claim 4, characterised in that the first and third air gaps (26, 28) are arranged at right angles to the direction of the armature movement.

6. Solenoid valve according to Claims 4 or 5, characterised in that the second and fourth air gaps (27, 29) are arranged in the direction of the armature movement.

7. Solenoid valve according to Claims 4 or 6, characterised in that the armature (9), the first magnetic conductor disc (2) and the second soft iron core (5) are of conical construction in the regions in which they form the first and third air gaps (26, 28).

8. Solenoid valve according to any of Claims 4 to 7, characterised in that the second and fourth air gaps (27, 29), are greater in the regions which are covered by the armature (9) only in the open state of the valve, than in the regions which are already covered by the armature (9) in the closed state of the valve.

9. Solenoid valve according to any of Claims 1 to 8, characterised in that the oppositely wound coils (10, 11) are arranged on a coil former (12).

10. Solenoid valve according to any of Claims 1 to 9, characterised in that the armature (9) is fitted into the solenoid valve in the axle direction after the assembly of the magnetic circuits.

11. Solenoid valve according to any of Claims 1 to 9, characterised in that the armature (9) is operated in magnetic saturation.

## Revendications

1. Robinet à soupape à commande électromagnétique comportant deux noyaux de fer doux (4, 5) qui sont respectivement entourés d'une bobine (10, 11), sont disposés coaxialement l'un à l'autre et entre lesquels est disposé un aimant permanent annulaire (1) et comportant également ment une armature (9) en matériau magnétique qui porte une soupape proprement dite (16) et qui est en permanence entourée de l'aimant permanent, caractérisé en ce que les noyaux de fer doux (4, 5) présentent chacun un cylindre intérieur (6) à l'intérieur desquels l'armature (9) peut se déplacer axialement; en ce que les bobines (10, 12) des noyaux de fer doux sont bobinées en sens contraires l'une de l'autre et sont montées en série; et en ce que le champ magnétique de l'aimant permanent (1) est aligné coaxialement avec les champs magnétiques des bobines (10, 11).

2. Robinet à soupape à commande électromagnétique selon la revendication 1, caractérisé en ce qu'entre l'aimant permanent (1) et le premier noyau de fer doux (4) est disposé un premier disque magnétique en forme d'anneau circulaire (2) et en ce qu'entre l'aimant permanent (1) et le second noyau de fer doux (5) est disposé un second disque magnétique en forme d'anneau circulaire (3).

3. Robinet à soupape à commande électromagnétique selon la revendication 2, caractérisé en ce que les disques magnétiques (2, 3) présentent une perméabilité magnétique élevée.

4. Robinet à soupape à commande électromagnétique selon l'une des revendications 1 à 3, caractérisé en ce qu'entre l'armature (9) et le premier disque magnétique (2) est disposé un premier entrefer (26), en ce qu'entre l'armature (9) et le premier noyau de fer doux est disposé un second entrefer (27); en ce qu'entre l'armature (9) et le second noyau de fer doux (5) est disposé un troisième entrefer (28); et en ce qu'entre lármature (9) et le second disque magnétique (3) est disposé un quatrième entrefer (29).

5. Robinet à soupape à commande électromagnétique selon la revendication 4, caractérisé en ce que le premier entrefer (26) et le second entrefer (28) sont disposés perpendiculairement à la direction du déplacement de l'armature.

6. Robinet à soupape à commande électromagnétique selon la revendication 4 ou la revendication 5, caractérisé en ce que le second entrefer (27) et le quatrième entrefer (29) sont disposés dans la direction du mouvement de l'armature.

7. Robinet à soupape à commande électromagnétique selon la revendication 4 ou la revendication 6, caractérisé en ce que l'armature (9), le premier disque magnétique (2) et le second noyau de fer doux (5) sont conçus coniques dans les zones dans lesquelles il forment le premier entrefer et le troisième entrefer (26, 28).

8. Robinet à soupape à commande électromagnétique selon les revendications 4 ou 7, caractérisé en ce que le second entrefer et le quatrième entrefer (27, 29) sont plus grands dans les zones qui ne sont recouvertes par l'armature (9) qu'à l'état ouvert de la soupape que dans les zones qui sont déjà recouvertes par l'armature (9) à l'état fermé de la soupape.

9. Robinet à soupape à commande électromagnétique selon l'une des revendications 1 à 8, caractérisé en ce que les bobines (10, 11), bobinées en sens contraire, sont disposées sur un bobinot (12).

10. Robinet à soupape à commande électromagnétique selon l'une des revendications 1 à 9, caractérisé en ce que l'armature (9) est montée dans le robinet à soupape à commande électromagnétique dans la direction axiale après assemblage des circuits magnétiques.

11. Robinet à soupape à commande électromagnétique selon l'une des revendications 1 à 9, caractérisé en ce que l'armature est exploitée en saturation magnétique.

# FIG. 1

# FIG. 2

# FIG. 3